# DEMANDE DE BREVET EUROPEEN

(11) **EP 0 949 206 A1**
(43) Date de publication de la demande: **13.10.1999**
(21) Numéro de dépôt: 99200632.0
(22) Date de dépôt: 04.03.1999
(51) Int. Cl.: C02F 3/06, C02F 3/30, C02F 3/28

(54) **Procédé et installation de dénitrification biologique d'eaux résiduaires**

(30) Priorité: 20.03.1998 LU 90231
(71) Demandeur: Welter, André, 7517 Mersch (LU)
(72) Inventeur: Welter, André, 7517 Mersch (LU); Welter, Nathalie, 7517 Mersch (LU)
(74) Mandataire: Meyers, Ernest

(57) **Abrégé**

Procédé de dénitrification biologique d'eaux résiduaires en réacteur (28) à écoulement permanent alimenté par un liquide nitrifié et un substrat organique gazeux à l'aide d'une culture de microorganismes dénitrifiante baignant dans le liquide, dans lequel on recueille les gaz de métabolisme produits par le processus de dénitrification biologique au-dessus du réacteur (36). On recircule au moins une partie des gaz de métabolisme récupérés au-dessus du réacteur (38), en circuit fermé, à travers un générateur de substrat gazeux (40), pour réinjecter ces gaz, enrichis de substrat gazeux, dans le fond du réacteur (50).

## Description

La présente invention concerne un procédé de dénitrification biologique d'eaux résiduaires nitrifiées en réacteur à flux continu à l'aide d'une culture de microorganismes baignant dans le liquide nitrifié et alimentée par un substrat organique gazeux. L'invention concerne également une installation pour la mise en oeuvre de ce procédé.

L'épuration biologique représente l'ensemble des méthodes d'épuration de l'eau usée par l'action de microorganismes. C'est, en fait, l'intensification et l'accélération des phénomènes d'autoépuration observés dans la nature par une augmentation nette de la densité des microorganismes épurateurs pour un volume d'eau donné et une optimisation de leur métabolisme et de leurs conditions de développement. Il existe plusieurs modes de traitement biologique. Le principe des boues activées utilise des microorganismes qui flottent librement dans l'eau à épurer. D'autres méthodes utilisent des microorganismes fixés (biomasse sessile) sur des supports mobiles tels que des tambours ou des disques rotatifs ou sur des supports fixes tels que des filtres percolateurs.

Le traitement biologique proprement dit est suivi d'une action physique telle qu'une décantation ou une filtration pour séparer la biomasse et l'effluent épuré, la biomasse pouvant être recirculée.

Les traitements biologiques peuvent être classés en traitements aérobies et traitements anaérobies. Le traitement aérobie est caractérisé par la présence d'air et représente donc l'optimisation des phénomènes d'épuration des eaux courantes pour lesquels le brassage entraîne la mise à disposition d'oxygène pour le métabolisme des microorganismes.

Le traitement anaérobie est un renforcement des phénomènes se déroulant dans les eaux stagnantes, donc en absence d'air.

Il existe deux types de traitements aérobies, effectués chacun par un groupe déterminé de microorganismes. L'oxydation de la matière organique carbonée, connue sous le nom de respiration, entraîne la production de CO₂ et H₂O. L'oxydation de la matière azotée (inorganique), connue sous le nom de nitrification, produit du NO₂ et NO₃, c'est-à-dire des nitrites et ensuite des nitrates en solution dans l'effluent.

En présence d'air, la respiration a lieu seule, dans un premier temps. Ceci est dû au fait que les bactéries nitrifiantes ont une vitesse de croissance et de développement inférieure à celle des bactéries effectuant l'oxydation de la matière carbonée. La nitrification peut alors seulement se produire si l'âge des boues, c'est-à-dire l'âge de la biomasse active, dépasse une valeur minimale.

Comme l'azote est uniquement oxydé en cours de nitrification, il n'est pas éliminé et est toujours présent dans l'effluent sous forme de nitrates et de nitrites. Son élimination par voie biologique est toutefois possible et connue sous le nom de dénitrification, qui est un traitement en milieu anaérobie pour réduire le NO₃ en azote gazeux.

La dénitrification est effectuée par une population particulière de bactéries anaérobies dites facultatives pouvant subsister tant en milieu aérobie qu'en milieu anaérobie. En présence d'air, ces bactéries effectuent une respiration et en absence d'air, elles basculent vers la dénitrification en prélevant l'oxygène sur les molécules de nitrate pour combiner cet oxygène avec le carbone d'un substrat organique et produire ainsi du gaz carbonique. La dénitrification ne peut donc avoir lieu que dans une eau nitrifiée au préalable. Ces bactéries anaérobies facultatives dissocient donc les molécules azotées en utilisant le O₂ pour la respiration et libérer, par cette réaction, de l'azote gazeux ainsi que du CO₂.

La réaction de dénitrification nécessite, par conséquent, la réalisation de trois conditions :
a) présence de liquide nitrifié, c'est-à-dire de matière azotée oxydée en solution sous forme de nitrates et nitrites ;
b) présence d'un substrat organique fournissant du carbone indispensable au métabolisme et à la croissance des microorganismes et combiné de ce fait à l'oxygène dissocié par les mêmes microorganismes des nitrates. Ce substrat organique peut se trouver naturellement dans les eaux résiduaires à traiter ou, à défaut, y être ajouté et
c) absence d'oxygène favorisée en évitant le brassage à l'air de l'eau à traiter.

On connaît différents scénarios de dénitrification dont trois principaux pour réunir ces trois conditions indispensables. Dans celle que l'on appelle le post-traitement de dénitrification, on fait d'abord subir aux eaux résiduaires une oxydation et une nitrification et, ensuite, une dénitrification. Etant donné que les eaux résiduaires sont débarrassées, lors de l'oxygénation par respiration, du support organique carboné, la condition b) n'est plus réalisée et il faut, pour la rétablir, faire un apport de substrat organique carboné. L'inconvénient du post-traitement réside dans le réglage, vu qu'un apport excessif de substrat organique soluble provoque une pollution secondaire de l'effluent.

Dans le prétraitement de dénitrification, on fait passer les eaux résiduaires d'abord dans un réacteur de dénitrification et, ensuite, un étage d'aération avec nitrification, Ici, à l'entrée du réacteur de dénitrification, le substrat organique est disponible, mais la condition a) n'est plus réalisée. A cet effet, on fait recirculer du liquide nitrifié de la sortie de l'étage aéré vers l'entrée du réacteur de dénitrification. Comparé au post-traitement, le prétraitement souffre de l'inconvénient d'une recirculation augmentant la charge hydraulique et d'un flux de fuite permanent d'effluent non dénitrifié.

Le troisième procédé est un procédé mixte appelé dénitrification simultanée qui consiste à effectuer, dans le même bassin, alternativement des phases de nitrification et de dénitrification des eaux résiduaires. Ici également, il faut accepter un flux de fuite d'effluent non dénitrifié. Un procédé particulier de cette dénitrification est décrit dans le document DE 19602385 C1.

Le but de la présente invention est de prévoir un nouveau procédé de post-traitement de dénitrification, ainsi qu'une installation pour sa mise en oeuvre.

Pour atteindre cet objectif, la présente invention prévoit un procédé de dénitrification biologique selon la revendication 1 ainsi qu'une installation selon la revendication 3.

Le processus préconisé consiste à faire passer les eaux nitrifiées, avant décantation ou filtration, par un réacteur contenant une biomasse dénitrifiante. Celle-ci n'étant active qu'en milieu anoxe, le réacteur doit
a) être fermé pour éviter l'entrée d'air
b) être accouplé à un générateur de substrat organique métabolisable par la biomasse dénitrifiante.

La présente invention préconise l'utilisation d'un substrat gazeux amené à partir du générateur vers la base du réacteur et récupéré en tête pour être réinjecté dans le générateur en circuit fermé. Sur son passage dans le réacteur, le substrat gazeux est partiellement métabolisé par la biomasse active et enrichi en gaz de métabolisme tels N₂ et CO₂ qui sont entraînés. Le mélange, ramené dans le générateur, y est enrichi en substrat gazeux et retourne dans le dénitrificateur pour effectuer le même cycle. Un système d'échappement en tête du réacteur permet l'évacuation du mélange gazeux excédentaire vers un biofiltre.

Le mélange gazeux en circulation assure des fonctions multiples, à savoir :
- l'approvisionnement de la biomasse dénitrifiante en substrat
- le brassage du réacteur pour éviter une sédimentation et un colmatage
- l'activation de l'échange du substrat avec la biomasse
- le transport des gaz résultant du métabolisme et leur éjection du réacteur

Les avantages de la présente invention sont les suivants :
a) Du fait d'être un post-traitement, la dénitrification ne requiert pas de recirculation de liquide nitrifié, d'où charge hydraulique minimale.
b) Le substrat utilisé ne pollue pas l'effluent, vu qu'il est gazeux, peu soluble et se sépare aisément du liquide sans être entraîné.
c) Un dosage précis du débit de substrat gazeux n'est pas nécessaire, vu que tout excédent est récupéré et recyclé.
d) L'absence de recirculation de liquide nitrifié et la mise à disposition permanente d'une quantité importante de substrat garantissent un rendement de dénitrification élevé.
e) Le réacteur de dénitrification peut aussi bien fonctionner suivant le principe des boues activées que suivant le principe du lit bactérien fixe immergé.
f) Le système permet l'utilisation de gaz de digestion anaérobie des boues qui est disponible sur les stations d'épuration dans la mesure où le processus épuratoire produit des boues non stabilisées. Ainsi le digesteur peut servir directement de générateur de substrat gazeux métabolisable.

D'autres particularités et caractéristiques de l'invention ressortiront de la description présentée ci-dessous, à titre d'illustration, en référence aux dessins annexés dans lesquels :
- la figure 1 montre le schéma synoptique d'un procédé connu de post-traitement de dénitrification classique
- la figure 2 montre le schéma synoptique d'un procédé de post-traitement de dénitrification suivant la présente invention
- la figure 3 montre schématiquement un réacteur de dénitrification selon la présente invention dans le cas particulier du lit solide immergé pris comme exemple

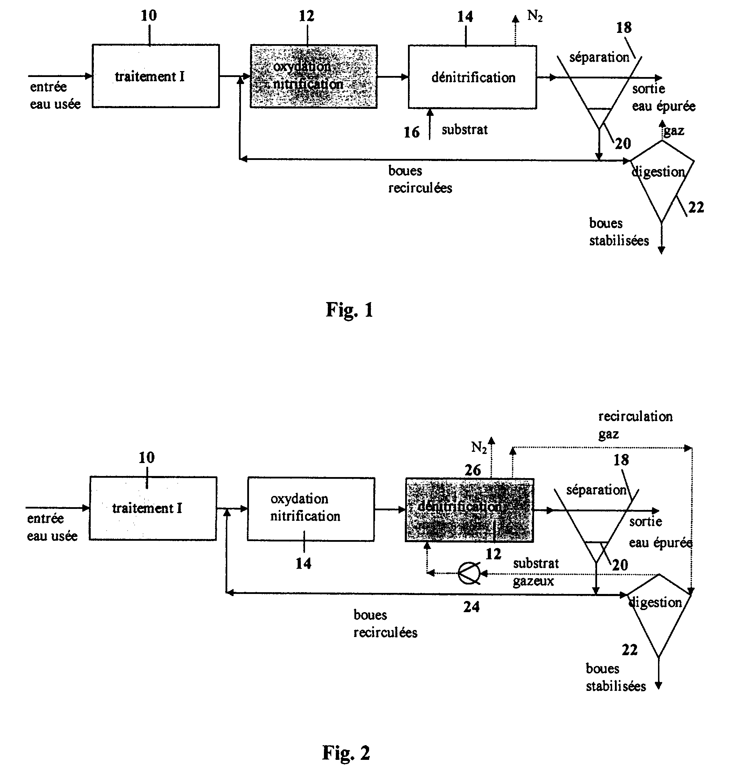

Sur la figure 1 montrant un post-traitement de dénitrification classique, les eaux résiduaires sont dirigées vers un étage de traitement primaire 10 où elles subissent une épuration consistant à débarrasser l'eau usée des impuretés pouvant être éliminées par voie physique, par exemple dégrillage, dessablage, dégraissage, décantation, ... etc.

Les eaux physiquement épurées traversent ensuite un étage de traitement aérobie 12 où la matière organique carbonée est oxydée pour produire du CO₂ et H₂O et où la matière azotée est oxydée en nitrites et nitrates.

Ce liquide nitrifié est ensuite envoyé dans un réacteur de dénitrification anaérobie 14. Etant donné qu'à la sortie de l'étage 12, l'eau nitrifiée est débarrassée de son substrat carboné naturel, il faut un apport artificiel correctement dosé de substrat carboné pour pouvoir effectuer une dénitrification rapide, ce qui est symbolisé par la flèche 16. L'alcool se prête bien comme substrat, car il est aisément assimilable par les bactéries.

Le liquide dénitrifié est ensuite dirigé dans un bassin de séparation 18 où la biomasse 20 est séparée de l'effluent épuré. Cette biomasse est alors recyclée vers l'entrée de l'étage aérobie 12. La biomasse excédentaire supposée non stabilisée, est reprise dans un digesteur 22 où elle est transformée par des bactéries anaérobies en boue stabilisée avec production de gaz.

La figure 2 montre un post-traitement de dénitrification selon la présente invention, qui se différencie de la figure 1 par l'ajoute d'un circuit fermé de gaz de digestion qui assure l'alimentation en substrat de l'étage de dénitrification. Le digesteur 22 sert de générateur de substrat gazeux métabolisable et la circulation est assurée par le compresseur 24. Après avoir traversé le réacteur, le mélange gazeux est récupéré en tête et recirculé vers le générateur de substrat gazeux. Le mélange gazeux excédentaire, dont N2, est évacué par l'échappement 26.

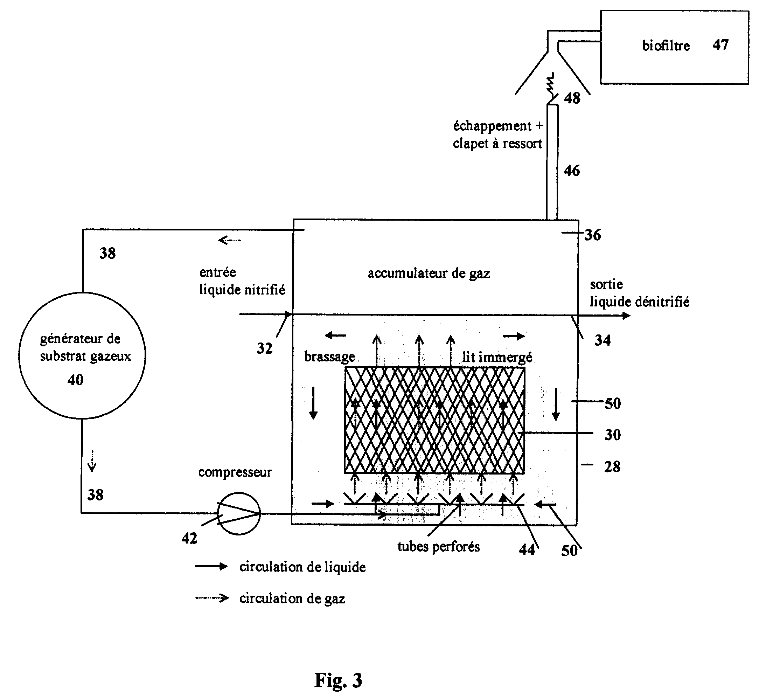

La figure 3 se rapporte à un réacteur selon la présente invention dans le cas particulier du lit immergé pris comme exemple. Il comporte une cuve 28 avec un lit solide immergé 30. Le lit 30 est constitué de matériaux naturels, par exemple pierraille de roche, ou artificiels (matière synthétique) à structure ordonnée (grillage, feuillage,...) ou non (empilement désordonné des unités constituantes), offrant une grande surface de colonisation par les microorganismes et un bon contact entre la biomasse et le liquide à traiter.

La cuve comporte une entrée 32 de liquide à traiter et une sortie 34 de liquide dénitrifié.

Conformément à la présente invention, la partie supérieure de la cuve 28 est un accumulateur 36 de gaz biologiques produits par le métabolisme des microorganismes. Cet accumulateur 36 est relié à travers un circuit fermé 38, dans lequel se trouve un générateur de substrat gazeux 40 et un compresseur 42 à un certain nombre de tubes à diffuseurs 44 se trouvant dans la cuve 28 en-dessous du lit immergé 30.

L'accumulateur 36 est relié à l'extérieur à travers un échappement 46 avec un clapet à ressort 48, éventuellement réglable, destiné à maintenir une très légère surpression à l'intérieur de l'accumulateur. Au-dessus de l'échappement se trouve un biofiltre 47 destiné à désodoriser les gaz d'échappement.

La dénitrification a lieu dans le volume du lit immergé 30 sous l'action d'une culture sessile de microorganismes se développant sur son support constitué par le lit immergé 30.

Le réacteur entre en fonctionnement dès la mise en route du compresseur 42. Suite à l'apport de substrat gazeux métabolisable par les tubes à diffuseurs 44, la biomasse fixée sur le support 30 devient active. Les gaz de métabolisme produits, dont N₂, se mélangent au substrat gazeux et remontent à travers le lit immergé 30 pour rejoindre l'accumulateur de gaz 36. Ici le mélange est aspiré à travers la tuyauterie 38 et à travers la générateur 40. Le mélange enrichi en substrat gazeux passe par le compresseur 42 et est réinjecté à la base du réacteur pour suivre le même cycle.

Les gaz de métabolisme étant générés dès la phase de démarrage de manière continue par la dénitrification, la pression augmente dans l'accumulateur 36, le clapet 48 s'ouvre et laisse passer le mélange gazeux excédentaire. On évite ainsi la pénétration d'air dans l'accumulateur 36 et on est assuré des conditions de fonctionnement anaérobie.

Le mélange gazeux en circulation dans le milieu liquide provoque un brassage qui génère un double mouvement circulaire du liquide dans le plan vertical. Le liquide remonte avec les bulles de gaz à travers la masse du lit immergé 30. Les bulles de gaz quittent ensuite le liquide vers l'accumulateur 36 tandis que le liquide débarrassé des bulles retourne, dans le sens des flèches 50, à la base du réacteur en traversant l'espace périphérique de celui-ci entre le lit fixe 30 et la cuve 28.

La particularité de la présente invention réside dans le fait que le réacteur de dénitrification proposé permet un post-traitement simple et rationnel par l'utilisation de substrat gazeux peu soluble dans l'eau en circuit fermé dans lequel le générateur de substrat gazeux est intégré. Du fait de la récupération et du recyclage de substrat non métabolisé par la biomasse dénitrifiante, le flux de substrat gazeux peut être choisi pour avoir les conditions de turbulence optimales dans le réacteur. Le procédé offre les avantages suivants :
- absence de recirculation de liquide nitrifié, d'où aucune charge hydraulique supplémentaire du traitement biologique
- rendement élevé, vu que la recirculation des gaz assure la mise à disposition permanente d'une quantité abondante de substrat
- élimination du risque de pollution secondaire de l'effluent par un apport massif de substrat, vu qu'il est en phase gazeuse et peu soluble
- absence de sondes relevant le degré de dénitrification, ainsi que de systèmes de réglage de l'apport en substrat rattachés à ces sondes

## Revendications

1. Procédé de dénitrification biologique d'eaux résiduaires en réacteur à écoulement permanent alimenté par un liquide nitrifié et un substrat organique gazeux à l'aide d'une culture de microorganismes dénitrifiante baignant dans le liquide, dans lequel on recueille les gaz de métabolisme produits par le processus de dénitrification biologique au-dessus du réacteur caractérisé en ce que l'on recircule au moins une partie des gaz de métabolisme récupérés au-dessus du réacteur, en circuit fermé, à travers un générateur de substrat gazeux, pour réinjecter ces gaz, enrichis de substrat gazeux, dans le fond du réacteur.

2. Procédé selon la revendication 1, caractérisé en ce que le substrat gazeux est un gaz de digestion anaérobie métabolisable par la biomasse dénitrifiante et produit dans un digesteur anaérobie.

3. Installation pour la mise en oeuvre du procédé selon l'une quelconque des revendications 1 ou 2 comprenant un réacteur fermé avec une entrée (32) pour le liquide à traiter, une sortie (34) des eaux traitées, des moyens (44) d'injection de gaz au fond du réacteur, une partie supérieure du réacteur étant constituée d'un accumulateur (36) de gaz biologique, caractérisée en ce que l'accumulateur (36) de gaz est relié, en circuit fermé (38) à travers un générateur de substrat gazeux (40) et un compresseur (42) auxdits moyens d'injection de gaz.

4. Installation selon la revendication 3, caractérisée en ce que le générateur de substrat gazeux (40) est un digesteur anaérobie.

5. Installation selon la revendication 3, caractérisée en ce que ledit accumulateur (36) est relié à l'extérieur par un échappement (46) muni d'un clapet à ressort réglable (48) destiné à maintenir une légère surpression dans l'accumulateur (36).

6. Installation selon la revendication 5, caractérisée en ce que les gaz d'échappement sont recueillis dans un biofiltre (47) destiné à les désodoriser.

7. Installation selon l'une quelconque des revendications 3 à 6, caractérisée en ce que le réacteur est du type boues activées.

8. Installation selon l'une quelconque des revendications 3 à 6, caractérisée en ce que le réacteur est du type lit solide fixe immergé.
